# FASCICULE DE BREVET EUROPEEN

(11) **EP 3 204 599 B1**
(45) Date de publication et mention de la délivrance du brevet: **12.08.2020**
(21) Numéro de dépôt: 15787260.7
(22) Date de dépôt: 09.10.2015
(51) Int. Cl.: E21B 43/013, F16L 1/20, E21B 17/01

(54) **DISPOSITIF DE RACCORDEMENT DÉFORMABLE DE CONDUITES SOUS-MARINES**
VERFORMBARE KOPPLUNGSVORRICHTUNG FÜR UNTERWASSERROHRE
DEFORMABLE COUPLING DEVICE FOR UNDERWATER PIPES

(30) Priorité: 10.10.2014 FR 1459735
(43) Date de publication de la demande: 16.08.2017
(73) Titulaire: Technip France, 92400 Courbevoie (FR)
(72) Inventeur: LEGEAY, Sébastien, F-76580 Le Trait (FR); BONNISSEL, Mélanie, F-78180 Montigny-le-Bretonneux (FR); NOSSA, Olivier, F-77500 Chelles (FR); TARBADAR, Samy, F-92400 Courbevoie (FR)
(74) Mandataire: Fédit-Loriot
(86) Numéro de dépôt international: PCT/FR2015/052725
(87) Numéro de publication internationale: WO 2016/055749

(56) Documents cités:
- WO-A1-2012/066031
- US-A1- 2010 018 717
- US-A1- 2011 162 748

## Description

La présente invention se rapporte à un dispositif de raccordement déformable destiné à relier ensemble, une conduite sous-marine de fond et une conduite sous-marine montante.

Un domaine d'application envisagé est celui du transport, en milieu offshore, de fluides tels que des gaz, de l'eau ou des hydrocarbures.

Des installations connues comprennent une conduite de fond, couramment dénommée « Flow Line » en langue anglaise, et une conduite sous-marine montante, dénommée également « riser », permettant de conduire le fluide, depuis le fond au sortir de la conduite de fond, jusqu'à la surface située au droit du fond marin, ou bien à l'inverse, depuis la surface vers l'entrée de la conduite de fond.

La conduite montante présente une extrémité inférieure ancrée dans le fond marin et est suspendue, par l'intermédiaire de son extrémité supérieure, à un flotteur immergé en dessous de la surface du milieu marin de manière à éviter de subir les influences des courants de surface. Néanmoins, les hydrocarbures sont extraits dans des fonds marins de plus en plus profonds, et par conséquent, les conduites montantes sont entraînées en mouvement et pivotent sensiblement autour de leur extrémité inférieure. Et au surplus, les conduites sont entraînées en mouvement de rotation autour de leur axe. En outre, les conduites sous-marines de fond sont également entraînées en mouvement, notamment longitudinalement, entre autre à cause des variations thermiques qu'elles subissent. En effet, le fluide que les conduites sous-marines véhiculent est plus ou moins chaud comparativement à la température de fond. Partant, les conduites tendent à s'allonger sensiblement lorsque le fluide s'écoule à l'intérieur, tandis qu'elles tendent à se raccourcir lors d'un arrêt de l'écoulement.

En conséquence, il est nécessaire de prévoir un dispositif de raccordement déformable entre l'extrémité inférieure de la conduite sous-marine montante et l'extrémité de la conduite sous-marine de fond afin de pouvoir assurer la jonction entre les deux conduites malgré les mouvements de l'une et/ou de l'autre.

On pourra se référer au document WO2014/043126, lequel fait référence à un dispositif de jonction tubulaire en U permettant d'autoriser le mouvement relatif de la conduite montante et de la conduite de fond sans pour autant perturber l'écoulement de l'hydrocarbure. La jonction tubulaire en U est faite d'un tube métallique conformé en U lequel est apte à se déformer longitudinalement selon le plan moyen défini par la conformation en U, mais également en dehors du plan afin d'autoriser la rotation de la conduite montante selon son propre axe.

Cependant, l'alternance des contraintes qui s'exercent sur la jonction tubulaire en U provoquent avec le temps la détérioration de ladite jonction. Au surplus, les installations de fond tendent à être recouvertes par des sédiments de fond, et leur enfouissement rend encore plus malaisée leur réparation ou leur remplacement partielle ou bien total. Les documents US2011/162748 A1 et US2010/018717 divulguent des jonctions permettant de prévenir l'enfouissement mais relativement malaisé à mettre en œuvre.

Aussi, un problème qui se pose et que vise à résoudre la présente invention est de fournir un dispositif de raccordement dont l'intégrité perdure au cours du temps, mais au surplus, qui soit moins, voire aucunement, sujet à l'enfouissement. En outre, un autre problème qui se pose, est de fournir un dispositif de raccordement plus aisé à mettre en œuvre.

Dans ce but, et selon un premier objet, la présente invention propose un dispositif de raccordement déformable selon la revendication 1.

Ainsi, une caractéristique de l'invention réside dans la mise en œuvre d'un dispositif de raccordement déformable, non plus rigide, mais flexible, réalisé à partir d'une gaine étanche et d'au moins un fil d'armure enroulé en hélice autour de cette gaine. Aussi, le conduit flexible ainsi formé est équipé d'au moins un flotteur pour pouvoir le maintenir écarté du fond marin. De la sorte, malgré les mouvements relatifs de la conduite montante et de la conduite de fond, respectivement au niveau de leurs extrémités amont et aval, le conduit flexible est adapté à se déformer tout en restant intègre, c'est-à-dire sans subir d'usure et/ou de détérioration susceptible d'entraîner un dysfonctionnement. Car en effet, le matériau polymère de la gaine, tout comme ledit au moins un fil d'armure sont déformés respectivement dans leurs plages de déformation élastique. Et ce, contrairement aux jonctions tubulaires en U, où le matériau métallique peut être déformé également jusque dans sa zone de déformation plastique. Et dans ce cas, la détérioration du matériau se produit beaucoup plus rapidement.

On observera que le fluide peut tout aussi bien être transporté depuis le fond marin vers la surface, lorsqu'il s'agit par exemple d'un hydrocarbure, que depuis la surface vers ledit fond marin lorsqu'il s'agit par exemple d'eau sous pression.

Au surplus, grâce au flotteur qui maintient le conduit flexible courbé en cloche au-dessus du fond marin, et par conséquent, dans une position écartée, l'enfouissement est beaucoup moins probable et prend beaucoup plus de temps, et partant, il est plus aisé d'intervenir pour le remplacer le cas échéant.

Selon un mode de mise en oeuvre de l'invention particulièrement avantageux, le dispositif de raccordement comprend une pluralité de flotteurs annulaires installés de proche en proche autour dudit conduit flexible. De la sorte, le conduit flexible est soumis à des efforts de traction vers la surface en différents points régulièrement espacés, ce qui permet une déformation régulière dudit conduit flexible, le rayon de courbure pris par ledit conduit flexible dans le cadre de cette déformation, en tout point dudit conduit flexible, étant strictement supérieur à un rayon minimal de courbure. En effet, le conduit flexible peut être courbé selon un rayon minimal de courbure en deçà duquel, la déformation est irréversible. Au surplus, la mise en oeuvre des flotteurs annulaires, formés de manchons à l'intérieur desquels vient s'étendre la gaine étanche et ledit au moins un fil d'armure enroulé autour, permet d'obtenir un effet de ballastage relativement compact et peu encombrant. Cette caractéristique présente un avantage, car la zone située autour de l'extrémité inférieure de la conduite montante au niveau du fond marin est généralement très encombrée.

En outre, ladite conduite sous-marine montante présentant des organes de guidage autour de ladite extrémité amont, une première extrémité desdites extrémités opposées dudit conduit flexible est équipée d'un connecteur destiné à être guidé vers ladite extrémité amont par lesdits organes de guidage. En effet, l'opération de raccordement proprement dite, nécessite de mettre en oeuvre un robot sous-marin qui vient alors entraîner ladite première extrémité du conduit flexible vers l'extrémité amont de la conduite montante. Afin de faciliter ce raccordement, et de faciliter le pilotage du robot sous-marin, les organes de guidage convergent vers l'extrémité amont et le connecteur peut venir en appui glissant contre ceux-ci pour atteindre l'extrémité amont.

Aussi, ladite extrémité amont de ladite conduite sous-marine montante comprend, de manière avantageuse, et selon une première variante, un raccord de connexion destiné à être orienté sensiblement horizontalement. De la sorte, il est aisé de venir y raccorder la première extrémité du conduit flexible selon une approche latérale par rapport à la conduite montante, au moyen d'un robot sous-marin.

Selon une seconde variante de réalisation, ladite extrémité amont de ladite conduite sous-marine montante comprend un raccord de connexion destiné à être orienté sensiblement verticalement. Aussi, le raccord de connexion est, soit orienté vers la surface et auquel cas il est formé en U, soit orienté vers le fond marin et il s'étend longitudinalement dans le prolongement de l'extrémité amont.

En outre, ladite première extrémité desdites extrémités opposées dudit conduit flexible comporte, de préférence, un connecteur présentant un coude. Le connecteur présente ainsi deux branches inclinées l'une par rapport à l'autre d'un angle compris par exemple entre 110° et 130°.

De la sorte, la première extrémité du conduit flexible peut être maintenue de manière inclinée par rapport à l'horizontale, tout aussi bien, selon la première variante de réalisation précitée ou bien selon la seconde ou le raccord de connexion est formé en U, pour autant que le connecteur soit ajusté en conséquence.

Selon la seconde variante, dans laquelle le raccord est orienté vers le fond marin, le connecteur est alors lui-même formé sensiblement en U. Les deux branches du connecteur sont toutefois inclinées l'une par rapport à l'autre de manière à ce que la première extrémité du conduit flexible présente un angle inférieur à 90° par rapport à l'horizontale.

Selon une variante d'exécution, le dispositif de raccordement comprend, en outre, des manchons limiteurs de courbure montés autour dudit conduit flexible au voisinage desdites extrémités opposées. Les manchons limiteurs de courbure comprennent des anneaux métalliques et/ou en polymère imbriqués les uns dans les autres, à la manière d'une colonne vertébrale ou bien reliés deux à deux par des tiges. De la sorte, les déformations du conduit flexible au voisinage de ses extrémités, lesquelles sont maintenues en position fixe, respectivement sur l'extrémité amont de la conduite montante et sur l'extrémité de la conduite de fond, sont limitées à un rayon de courbure donné, et supérieure au rayon minimal de courbure.

Selon un mode de réalisation de l'invention particulièrement avantageux, ledit conduit flexible présente un rayon minimal de courbure MBR et une longueur L, et ladite longueur L est comprise entre 2 π et 5/2 π fois ledit rayon minimal de courbure MBR. Ainsi, on obtient un dispositif de raccordement suffisamment éloigné du fond marin et aussi, qui puisse subir les déformations dues aux mouvements relatifs de la conduite montante et de la conduite de fond sans détérioration.

Selon un mode préféré de réalisation de l'invention, ledit au moins un fil d'armure est enroulé en hélice de manière à former des spires jointives autour de ladite gaine étanche. Partant, la gaine étanche en matériau polymère est parfaitement protégée à l'intérieur des spires dudit au moins un fil d'armure. Et au surplus, des spires peuvent être entraînées en mouvement les unes par rapport aux autres tout en restant dans la plage de déformation élastique dudit au moins un fil d'armure.

On observera que le conduit flexible du dispositif de raccordement, subit essentiellement des contraintes radiales, et très peu de contraintes axiales. Partant, la mise en œuvre d'une couche d'armures de traction n'est pas nécessaire. Toutefois, dans certaines circonstances où le conduit flexible est susceptible de subir de tels efforts de traction, au moins une couche additionnelle d'armures de traction est mise en œuvre autour des spires jointives dudit au moins un fil d'armure enroulé en hélice a pas courts. La couche additionnelle est alors constituée d'une pluralité de fils d'armure enroulés à pas long. Au surplus, dans d'autres circonstances d'exploitation, on met en œuvre un conduit flexible présentant au moins deux fils d'armure complémentaires, enroulés en hélice à pas court.

Avantageusement, le dispositif de raccordement comprend en outre une gaine externe de protection qui s'étend autour dudit au moins un fil d'armure enroulé en hélice. De la sorte, la gaine étanche en matériau polymère, est totalement préservée de la pression hydrostatique. En effet, cette dernière est reprise par les spires dudit au moins un fil d'armure sur lesquelles vient s'appliquer la gaine externe de protection. Elle est elle-même réalisée avantageusement dans un matériau polymère.

Au surplus, le dispositif de raccordement comprend un raccord de connexion automatique destiné à être monté sur ladite extrémité amont, et un embout de connexion automatique installé à ladite première extrémité desdites extrémités opposées, ledit embout de connexion automatique étant destiné à être engagé dans ledit raccord de connexion automatique. Ainsi, lors de la mise en œuvre du dispositif de raccordement, le robot sous-marin vient engager l'embout de connexion à travers le raccord de connexion automatique, de manière à, d'une part réaliser une liaison étanche et d'autre part, à les maintenir ensemble en position fixe.

Par ailleurs, ladite extrémité aval de ladite conduite sous-marine de fond présente, selon une variante de réalisation, un embout aval orienté sensiblement verticalement. De la sorte, le conduit flexible est mieux préservé des déformations lorsque l'extrémité aval de la conduite sous-marine de fond est entraînée en mouvement selon une forte amplitude.

Selon un autre objet, la présente invention propose une méthode de raccordement selon la revendication 14.

Ainsi, une autre caractéristique avantageuse de l'invention réside dans la méthode de raccordement de la conduite sous-marine de fond et de la conduite montante, au moyen du dispositif de raccordement comportant ledit conduit flexible. En effet, grâce à la flexibilité du dispositif de raccordement, le raccordement est rendu plus aisé.

Selon un mode de mise en œuvre particulièrement avantageux, à l'étape 2), on raccorde l'une desdites extrémités opposées à ladite extrémité aval de ladite conduite sous-marine de fond, et on relie l'autre desdites extrémités opposées et ladite extrémité amont au moyen d'un câble de tirage amont pour pouvoir entraîner ladite autre desdites extrémités opposées vers ladite extrémité amont. Ainsi, on facilite le raccordement en tirant sur le câble de tirage amont, au moyen d'un treuil installé au niveau de ladite extrémité amont. De la sorte, on raccourci le câble de tirage amont, et partant ladite autre extrémité se rapproche de l'extrémité amont.

En outre, selon un autre mode de mise en œuvre de l'invention particulièrement avantageux, on relie ladite une desdites extrémités opposées à ladite extrémité aval au moyen d'une câble de tirage aval pour pouvoir entraîner ladite une desdites extrémités opposées vers ladite extrémité aval. De la même façon que pour l'autre extrémité, on vient ici entraîner ladite une desdites extrémités opposées vers l'extrémité aval grâce au câble de tirage aval aisément pour pouvoir les raccorder ensuite.

Selon une variante de réalisation, les câbles de tirage peuvent être entraînés depuis la surface, grâce à une poulie de renvoi ajustée à la place des treuils, comme on l'expliquera ci-après.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique illustrant de façon générale le contexte de l'invention selon un premier mode de mise en œuvre ;
- la Figure 2 est une vue schématique de détail de la Figure 1 montrant l'objet de l'invention dans une première situation ;
- la Figure 3 est une vue schématique de détail de la Figure 1 montrant l'objet de l'invention dans une seconde situation ;
- la Figure 4 est une vue schématique montrant une méthode de raccordement d'une conduite sous-marine de fond et d'une conduite sous-marine montante, dans une première phase d'approche ;
- la Figure 5 est une vue schématique de détail de la Figure 4, illustrant une deuxième phase d'approche ;
- la Figure 6 est une vue schématique de détail de la Figure 4, illustrant une troisième phase d'approche ;
- la Figure 7 est une vue schématique montrant le dispositif de raccordement résultant de la mise en œuvre selon la méthode illustrée sur les Figures 4 à 6 ; et,
- la Figure 8 est une vue schématique montrant le dispositif de raccordement résultant de la mise en œuvre selon la méthode illustrée sur les Figures 4 à 6, selon une variante de réalisation.

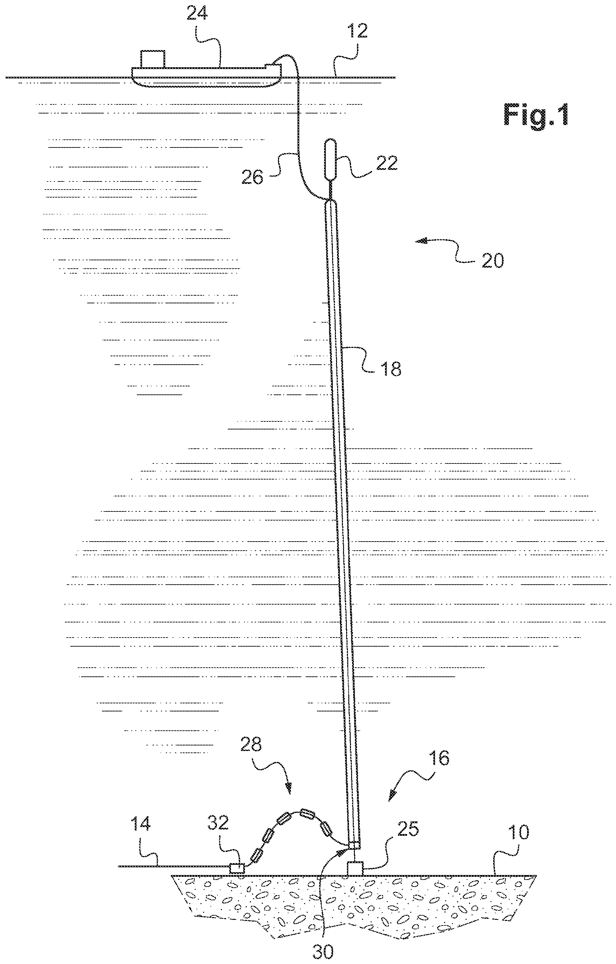

La Figure 1 illustre schématiquement une hauteur d'eau, par exemple de 1500 m, entre un fond marin 10 et une surface 12. Une conduite sous-marine de fond 14 ou « Flow Line » en langue anglaise, s'étend sur le fond marin 10. Elle rejoint une zone d'ancrage 16 et elle peut directement être issue d'une installation sous-marine non représentée, ou bien d'un puits apte à délivrer un hydrocarbure. À partir de la zone d'ancrage 16 et en direction de la surface 12, s'étend sensiblement verticalement une conduite sous-marine montante 18 jusqu'à une zone de subsurface 20 située en dessous de la surface 12, et dans laquelle elle est retenue par un flotteur 22. À l'opposé, la conduite montante est retenue dans le fond marin 10 au moyen d'une fondation 25. En surplomb, et à la surface 12 flotte un navire de surface 24 relié à la conduite sous-marine montante 18 au moyen d'une conduite flexible 26. En outre, au niveau du fond marin 10, la conduite sous-marine montante 18 et la conduite sous-marine de fond 14 sont reliées ensemble au moyen d'un dispositif de raccordement déformable 28, que l'on détaillera ci-après. De la sorte, le fluide qui s'écoule à l'intérieur de la conduite sous-marine de fond 14 peut être acheminé jusqu'au navire de surface 24 par l'intermédiaire de la conduite sous-marine montante 18 et de la conduite flexible 26. Dans ce cas, il s'agit d'un hydrocarbure, que l'on entend remonter à la surface. Toutefois, dans certaines circonstances, il est nécessaire d'acheminer un gaz ou de l'eau sous pression en sens inverse, depuis la surface vers le fond marin.

La conduite sous-marine montante 18 présente une extrémité amont 30, tandis que la conduite sous-marine de fond 14 présente une extrémité aval 32.

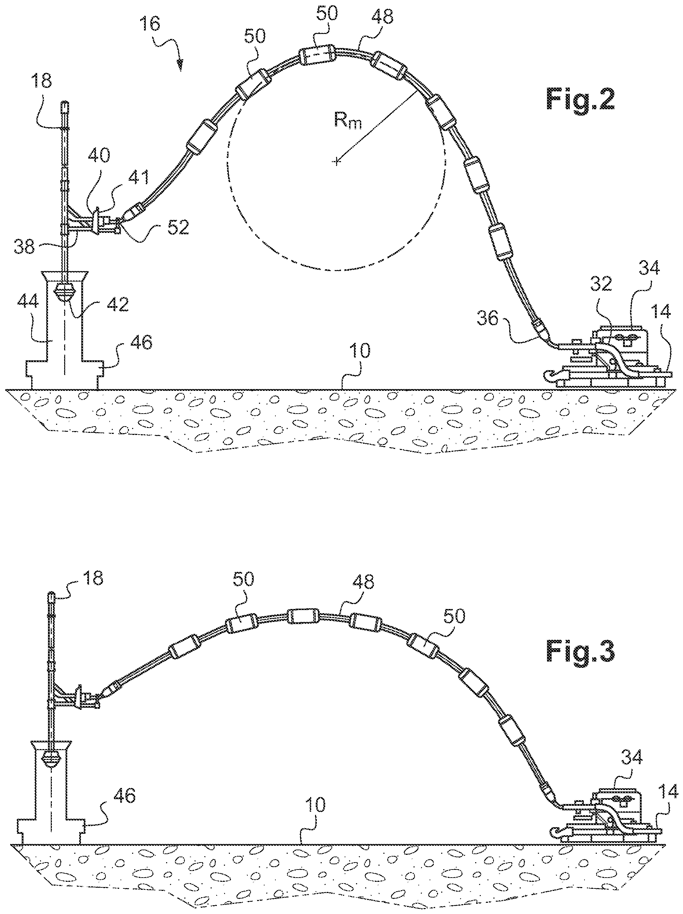

On se reportera à présent sur la Figure 2 montrant plus en détail la zone d'ancrage 16. On y retrouve également le fond marin 10 et la conduite sous-marine de fond 14 dont l'extrémité aval 32 est solidaire d'un chariot 34 reposant sur le fond marin 10. Le chariot 34 peut être un terminal de fin de conduite sous-marine de fond, ou Flow Line End Termination (FLET) en langue anglaise, un raccord de conduite en T, ou In Line Tee (ILT) en langue anglaise, une valve sous-marine d'isolation, ou Subsea Security Isolation Valve (SSIV) en langue anglaise, ou tout autre équipement pour conduite sous-marine connu de l'homme du métier.

Le chariot 34 est alors susceptible d'être entraîné en translation sur le fond marin 10 lorsque la conduite sous-marine de fond 14 s'allonge sous l'effet de la chaleur que lui transmet le fluide chaud transporté, ou, dans un sens opposé, lorsqu'elle se rétracte du fait d'un arrêt de circulation dudit fluide chaud.

L'extrémité aval 32 est rigide, et formée en W, pour pouvoir se terminer par un embout aval 36 incliné d'environ 25° par rapport à la verticale, et sensiblement en surplomb du fond marin 10 à une hauteur par exemple sensiblement supérieure à 4 m.

Selon d'autres modes de mise en œuvre non représentés, l'embout aval peut être incliné, par rapport à l'horizontale, d'un angle compris entre +/- 90°. Aussi, l'extrémité aval rigide peut être formée simplement d'un coude.

En outre, l'embout aval peut être porté à une hauteur par rapport au fond marin comprise entre 0,5 m et 100 m.

S'agissant de la conduite montante 18, elle présente une extrémité amont coudée 38 terminée par un raccord de connexion automatique 40. La conduite montante 18 s'étend selon une composante verticale, tandis que l'extrémité amont coudée 38 s'étend sensiblement horizontalement. Au surplus, la conduite montante 18 comporte des organes de guidage 41 sensiblement coniques, et situés autour de l'extrémité amont coudée 38. On expliquera ci-après leurs fonctions.

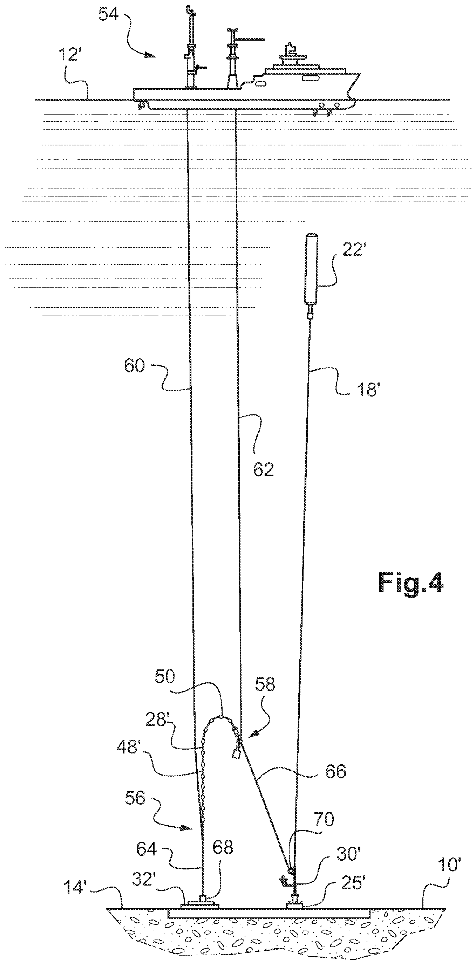

Selon une variante de réalisation de l'invention non représentée, l'extrémité amont de la conduite sous-marine montante 18 comprend un raccord de connexion orienté sensiblement verticalement vers le fond marin. Selon une variante d'exécution illustrée sur les figures 4 à 7, et que l'on décrira plus en détail dans la suite de la description, le raccord de connexion est orienté verticalement à l'opposé du fond marin, vers la surface.

En outre, la conduite montante 18 se prolonge par une extrémité inférieure d'ancrage 42 montée en prise dans une cage de retenue 44 solidaire d'une fondation 46 ancrée dans le fond marin 10. L'extrémité inférieure d'ancrage 42 est montée pivotante dans la cage de retenue 44. De la sorte, la conduite montante 18 peut être amenée non seulement à pivoter sensiblement autour de son extrémité inférieure d'ancrage 42 selon le mouvement des courants marins, mais également, elle peut être amenée à être entraînée en rotation selon son propre axe. Dans ce dernier cas, l'extrémité amont coudée 38 tend à être entraînée sensiblement en rotation selon un plan horizontal.

Entre le raccord de connexion automatique 40 prolongeant la conduite sous-marine montante 18 et l'embout aval 36 prolongeant la conduite sous-marine de fond 14, il s'étend une distance sensiblement inférieure à 40 m par exemple, selon une composante horizontale. Au surplus, l'embout aval 36 est raccordé au raccord de connexion automatique 40 par l'intermédiaire d'un conduit flexible 48 étendu selon une courbe conformée en cloche, et que l'on va tout d'abord décrire structurellement.

Selon une autre variante de réalisation, il s'étend une distance de l'ordre du kilomètre entre le raccord de connexion automatique 40 et l'embout aval 36 prolongeant la conduite sous-marine de fond 14.

Le conduit flexible 48 comprend une gaine interne étanche faite dans un matériau polymère, et un fil d'armure enroulé en spirale, en formant des spires jointives, autour de la gaine interne. Aussi, il est enroulé à pas courts. Le fil d'armure en spirale préserve la gaine interne étanche vis-à-vis de l'extérieur, mais surtout, la contient lorsqu'un hydrocarbure sous pression s'écoule à l'intérieur. De la sorte, le fil d'armure enroulée en spirale à pas court permet de reprendre les efforts radiaux qui s'exercent sur la gaine interne.

Selon une autre variante de réalisation, une paire de fils d'armure imbriqués l'un dans l'autre, est enroulée en spirale à pas court autour de la gaine interne étanche.

Préférentiellement, le fil d'armure, ou bien la paire de fils d'armure, enroulés en spirale sont eux-mêmes recouverts d'une gaine externe de protection afin d'éviter que la gaine interne étanche ne soit soumise à la pression hydrostatique. Avantageusement, et lorsque le conduit flexible 48 est susceptible d'être soumis à des efforts de traction longitudinaux, au moins une couche d'armure de traction enroulée a pas long, est montée entre la gaine externe de protection et les spires jointives du fil d'armure. En outre, selon une variante d'exécution, et dans le cas ou la gaine interne étanche est susceptible de s'effondrer sur elle-même, une carcasse métallique, faite d'une bande métallique agrafée en spirale, est mise en œuvre à l'intérieur.

Un tel conduit 48 peut par exemple, présenter un poids compris entre 100 kg par mètre et 2000 kg par mètre, et le volume qu'il représente est compris entre 30 l et 200 l par mètre. Préférentiellement, il présente, par exemple, un poids compris entre 350 et 450 kilogrammes par mètre, pour un volume interne compris entre 50 et 70 litres par mètre.

Ainsi, grâce à sa structure, le conduit flexible 48 est susceptible d'être courbée jusqu'à un rayon minimal de courbure Rₘ, compris par exemple entre 5 m et 15 m, plus précisément entre 8 et 10 mètres. Selon un mode de réalisation de l'invention, la longueur du conduit flexible est comprise entre 2 π et 5/2 π fois le rayon minimal de courbure Rₘ.

Au surplus, le conduit flexible 48 est équipé de flotteurs 50 formés de manchons annulaires à l'intérieur desquels vient s'étendre le conduit flexible 48. Les flotteurs 50 sont régulièrement espacés les uns des autres sur le conduit flexible 48, à des distances comprises par exemple entre 2 et 10 mètres.

Selon une variante de réalisation, où le conduit flexible présente une longueur de l'ordre du kilomètre, les flotteurs peuvent être espacés successivement les uns des autres d'une distance comprise entre 20 m et 100 m par exemple.

Aussi, compte tenu du poids du conduit flexible 48, additionné de celui du fluide qu'il transporte, le nombre et le volume des flotteurs 50 seront adaptés en conséquence. En première approximation, un flotteur présentant un volume d'air d'un mètre cube, sera en mesure de reprendre un poids sensiblement équivalent à 1000 kg.

De la sorte, et tel que représenté sur la Figure 2, le conduit flexible 48 présente une longueur voisine de 50 m.

Selon ladite autre variante de réalisation, le conduit flexible 48 peut présenter une longueur comprise entre quelques dizaines de mètres à plusieurs kilomètres. Le conduit flexible 48 comprend une première extrémité et une seconde extrémité agencée à l'opposé de ladite première extrémité. Un embout de connexion automatique 52 peut être installé sur la première extrémité. La seconde extrémité peut être sertie dans l'embout aval 36.

L'embout de connexion automatique 52 est coudé selon un angle compris entre 115° et 135° par exemple. Avantageusement l'angle du coude est voisin de 120° et de la sorte, la première extrémité du conduit flexible 48 est inclinée d'un angle d'environ 30° par rapport à la verticale, puisque l'embout de connexion automatique 52 est engagé dans le raccord de connexion automatique 40 sensiblement horizontalement. On observera que l'embout de connexion automatique 52, ou connecteur, est engagé dans le raccord de connexion automatique 40 par l'intermédiaire d'un robot sous-marin et que dans la dernière phase d'approche, l'embout de connexion automatique 52 est guidé latéralement grâce aux organes de guidage 41.

Tel que représenté sur la Figure 2, l'extrémité amont coudée 38 terminée par le raccord de connexion automatique 40 s'étend à une hauteur d'environ 15 m par rapport au fond marin 10, le conduit flexible 48 supporté par les flotteurs 50 et conformé selon une courbe en cloche présentant un extremum voisin de 30 m par rapport au fond marin 10.

Les dimensions indiquées ici sont nullement limitatives, et l'extrémité amont coudée 38 peut venir s'étendre, par exemple, à une hauteur d'environ 150 m par rapport au fond marin 10, et auquel cas la longueur du conduit flexible 48 est augmenté en conséquence, tandis que l'extremum de la courbe en cloche vient s'étendre à une hauteur supérieure à 150 m.

Dans ces conditions, on comprend que le dépôt des sédiments sur le fond marin 10 qui conduit généralement à l'enfouissement des structures, ne peut en pareille circonstance recouvrir le conduit flexible 48 rapidement. On conçoit d'ailleurs que pour une durée d'exploitation de 20 ans, le risque d'enfouissement est quasiment nul.

En outre, grâce au conduit flexible 48 conformé en cloche, le mouvement relatif de la conduite sous-marine montante 18 et de la conduite sous-marine de fond 14 va pouvoir s'opérer sans risque pour la poursuite de l'exploitation. En effet, en considérant par exemple que sur la Figure 2, le fluide chaud circule dans les conduites 14, 18 et le conduit flexible 48, la conduite de fond 14 présente une longueur d'exploitation supérieure à sa longueur de repos pour laquelle le fluide ne circule pas. Cela est simplement dû à l'énergie thermique fournie par le fluide à la conduite sous-marine de fond 14.

En revanche, dès que le fluide chaud cesse de circuler, la conduite sous-marine de fond 14 tend à se refroidir et partant à se rétracter. En conséquence, et ainsi que l'illustre la Figure 2, le chariot 34 entraîné sur le fond marin 10 par la conduite sous-marine de fond 14, s'écarte alors de la fondation 46 et partant, le conduit flexible 48 s'allonge, tandis que les flotteurs 50 se rapprochent du fond marin 10.

Si l'amplitude de mouvement du chariot 34 est par exemple de l'ordre de la dizaine de mètres, on comprend que la déformation du conduit flexible 48 est tout à fait supportable, de part sa construction, sans entraîner d'endommagement, en comparaison des dispositifs de raccordement déformables selon l'art antérieur fait de tubes rigides conformés en U.

Au surplus, le mouvement de rotation de la conduite sous-marine montante 18 autour de son propre axe, et qui provoque la rotation sensible dans un plan horizontal de l'extrémité amont coudée 38, est totalement absorbé par la déformation du conduit flexible 48. Avantageusement, de manière à éviter que celui-ci soit trop fortement courbé au niveau de ses extrémités, elles sont équipées de manchons limiteur de courbure, non représenté ici.

En référence aux Figures 4 à 7, on décrira une méthode de raccordement selon l'invention. Les éléments équivalents aux éléments représentés sur les Figures 1 à 3, présenteront la même référence affectée d'un signe prime : « ' ». Les autres éléments présenteront une référence, dans la suite de références déjà utilisées.

Ainsi, on retrouve sur la Figure 4, une conduite sous-marine montante 18' amarrée à une fondation 25' ancrée dans un fond marin 10', et retenue verticalement par un flotteur 22'. Une conduite sous-marine de fond 14' s'étend sur le fond marin 10' et elle se termine par une extrémité avale 32' située près de ladite fondation 25'. Quant à la conduite sous-marine montante 18', elle présente, près de la fondation 25', une extrémité amont 30'.

Par ailleurs, au droit du fond marin 10', un navire d'installation 54 navigue à la surface 12'. Au surplus, un dispositif de raccordement déformable 28', selon l'invention, et présentant deux extrémités opposées 56, 58, est suspendu au navire d'installation 54 au moyen de deux câbles de suspension 60, 62. Le dispositif de raccordement déformable 28' comprend un conduit flexible 48' équipé de flotteurs 50'. Les deux câbles de suspension 60, 62 sont respectivement reliés aux deux extrémités opposées 56, 58.

Le dispositif de raccordement déformable 28' est ainsi descendu vers le fond marin 10', au-dessus des extrémités amont 30' et aval 32' respectivement des conduites sous-marines montante 18' et de fond 14', en relâchant les câbles de suspension 60, 62. Afin de faciliter cette approche, la conduite sous-marine montante 18' est sensiblement écartée de sa position verticale en entraînant latéralement le flotteur 22' au moyen d'un remorqueur non représenté à la surface 12'.

Dès que le dispositif de raccordement déformable 28' est suffisamment proche des extrémités amont 30' et aval 32', selon un mode de mise en œuvre particulièrement avantageux, ses deux extrémités opposées 56, 58 sont respectivement reliées aux extrémités amont 30' et avale 32' au moyen d'un câble de tirage aval 64 et d'un câble de tirage amont 66. Le câble de tirage aval 64 est engagé dans un treuil aval 68 au niveau de l'extrémité aval 32', tandis que le câble de amont 66 est engagé dans un treuil amont 70 au niveau de l'extrémité amont 30'.

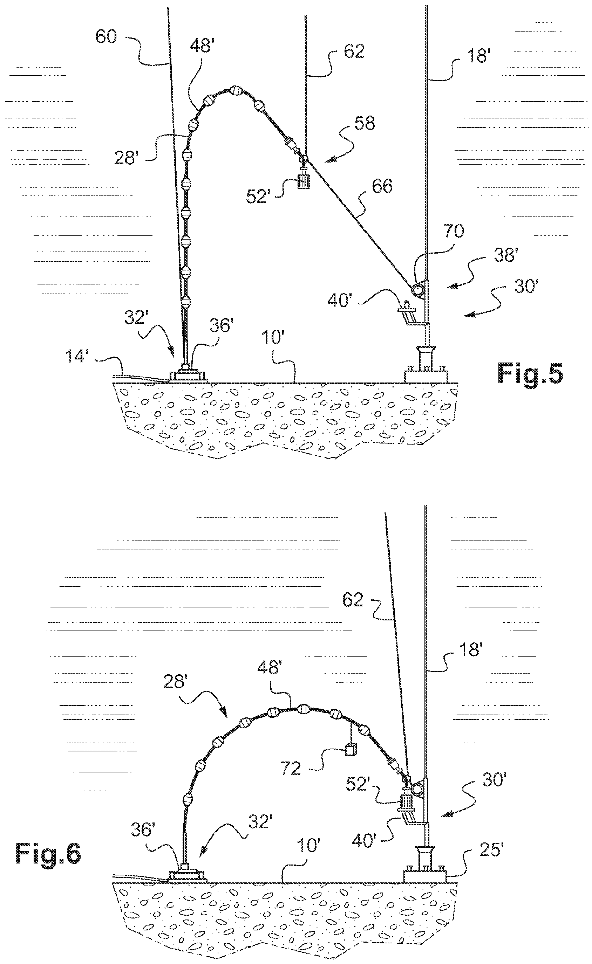

On se reportera à présent sur les figures 5 et 6 détaillant la méthode de raccordement. On retrouve en détail sur la figure 5 la conduite sous-marine de fond 14' et la conduite sous-marine montante 18, présentant respectivement leur extrémité avale 32' et leur extrémité amont 38'. L'extrémité avale 32' se prolonge par un embout aval 36' sensiblement vertical orienté à l'opposé du fond marin 10'. Quant à l'extrémité amont 38', elle est coudée en U de manière à présenter un raccord de connexion 40' orienté également verticalement à l'opposé du fond marin 10'. Sur cette figure 5, grâce au treuil aval 68, le câble de tirage aval 64 a été enroulé et l'une des extrémités 56 du dispositif de raccordement déformable 28' a été entraînée vers l'embout aval 36' pour ensuite y être engagé. On observera que le câble de suspension correspondant 60 a été relâché dans les mêmes proportions.

Ensuite, le treuil amont 70 est actionné pour enrouler le câble de tirage amont 66 et ainsi entraîner l'autre extrémité 58 du dispositif de raccordement déformable 28' vers le raccord de connexion 40' comme l'illustre la figure 6. Aussi, le câble de suspension correspondant 62 est relâché parallèlement. Le conduit flexible 48' du dispositif de raccordement déformable 28' tend à former ainsi une courbe en cloche au-dessus du fond marin 10' entre l'extrémité amont 30' et l'extrémité aval 32'.

L'embout de connexion automatique 52' et le raccord de connexion 40' sont proches l'un de l'autre, mais ne sont pas nécessairement orientés dans la même direction, ni même coaxiaux. Aussi, pour pallier cet inconvénient, et faciliter la connexion ultérieure, on fournit une masse pesante 72 et on ajuste ladite masse pesante 72 sur ledit conduit flexible 48', à une distance déterminée de l'embout de connexion automatique 52', de manière à pouvoir cambrer ledit conduit flexible 48' et réorienter l'embout de connexion automatique 52'. Le poids de la masse pesante 72 est également déterminé pour pouvoir parfaire cette orientation. Il peut par exemple varier entre 100 kg et 1000 kg.

La masse pesante 72 est par exemple installée sur le conduit flexible 48' avant de l'immerger, ou bien directement in situ au moyen d'un robot sous-marin, non représenté.

Ensuite, grâce au robot sous-marin, l'embout de connexion automatique 52' est relié au raccord de connexion 40' afin d'assurer le raccordement.

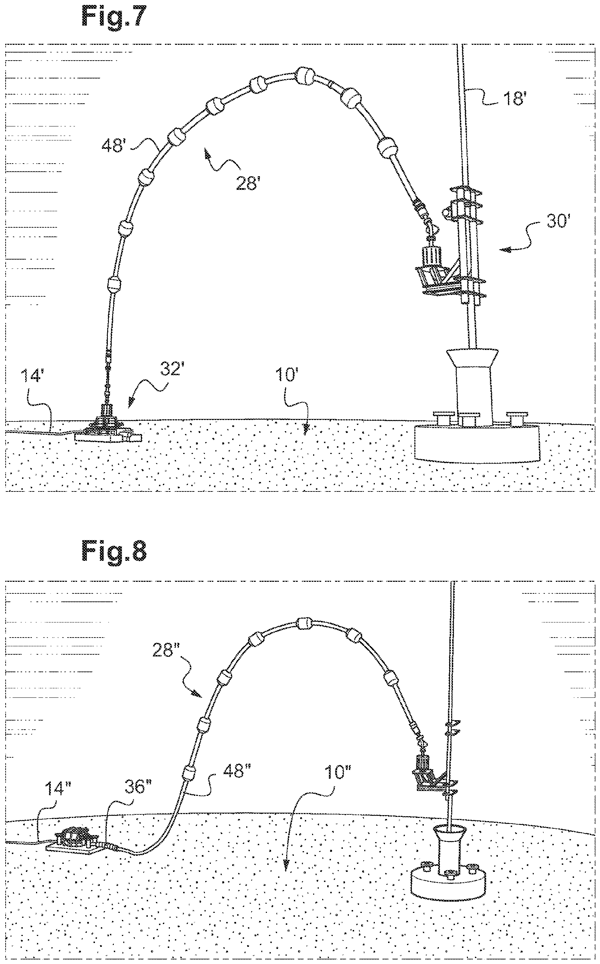

Sur la figure 7 on retrouve ainsi le dispositif de raccordement déformable 28' et le conduit flexible 48' conformé en cloche au-dessus du fond marin 10', reliant l'extrémité amont 30' de la conduite sous-marine montante 18' et l'extrémité aval 32' de la conduite sous-marine de fond 14'.

Selon une autre variante de réalisation, illustrée sur la figure 8, où les éléments équivalents aux éléments représentés sur la figure 7 présentent la même référence affectée d'un signe double prime, « " », l'embout aval 36" prolonge la conduite sous-marine de fond 14" sensiblement parallèlement on fond marin 10", et non plus verticalement. Le conduit flexible 48" du dispositif de raccordement déformable 28", forme alors une double courbure, avec une première partie concave et une seconde convexe.

## Revendications

1. Dispositif de raccordement déformable, comprenant le dispositif de raccordement et une conduite sous-marine montante, destiné à relier ensemble, une conduite sous-marine de fond (14) étendue selon une composante horizontale sur un fond marin (10) pour véhiculer un fluide, et la conduite sous-marine montante (18) s'étendant depuis ledit fond marin, selon une composante verticale, vers une surface marine (12), pour pouvoir entraîner ledit fluide entre ledit fond marin et ladite surface marine (12), ledit dispositif de raccordement présentant deux extrémités opposées, tandis que ladite conduite sous-marine de fond (14) présente une extrémité aval (32) et que ladite conduite sous-marine montante (18) présente une extrémité amont (38), lesdites extrémités opposées étant destinées à être raccordées respectivement auxdites extrémités amont et aval ; ledit dispositif de raccordement comprenant :
- une gaine étanche en matériau polymère et au moins un fil d'armure enroulé en hélice autour de ladite gaine étanche pour former un conduit flexible (48);
- au moins un flotteur (50) relié audit conduit flexible (48), de manière à pouvoir conformer ledit conduit flexible selon une courbe en cloche au regard dudit fond marin (10) entre lesdites extrémités amont (38) et aval (32) ;
**caractérisé en ce que** ladite conduite sous-marine montante (18) présente des organes de guidage (41) autour de ladite extrémité amont (38) et convergeant vers l'extrémité amont (38), tandis qu'une première extrémité desdites extrémités opposées dudit conduit flexible (48) est équipée d'un connecteur (52) destiné à venir en appui glissant contre lesdits organes de guidage et à être guidé vers ladite extrémité amont (38) par lesdits organes de guidage (41) pour atteindre ladite extrémité amont (38).

2. Dispositif de raccordement selon la revendication 1, **caractérisé en ce qu'**il comprend une pluralité de flotteurs annulaires (50) installés de proche en proche autour dudit conduit flexible (48).

3. Dispositif de raccordement selon la revendication 1 ou 2, **caractérisé en ce que** la conduite montante (18) comporte des organes de guidage (41) sensiblement coniques.

4. Dispositif de raccordement selon la revendication 3, **caractérisé en ce que** ladite extrémité amont (38) de ladite conduite sous-marine montante (18) comprend un raccord de connexion orienté selon une direction située entre une direction horizontale et une direction verticale à l'opposé dudit fond marin (10).

5. Dispositif de raccordement selon la revendication 4, **caractérisé en ce que** ladite extrémité amont (38) de ladite conduite sous-marine montante (18) comprend un raccord de connexion (40) orienté sensiblement horizontalement.

6. Dispositif de raccordement selon la revendication 4, **caractérisé en ce que** ladite extrémité amont (38) de ladite conduite sous-marine montante (18) comprend un raccord de connexion orienté sensiblement verticalement.

7. Dispositif de raccordement selon l'une quelconque des revendications 1 à 6, **caractérisé en ce que** ladite première extrémité desdites extrémités opposées dudit conduit flexible (48) comporte un connecteur (52) présentant un coude.

8. Dispositif de raccordement selon l'une quelconque des revendications 1 à 7, **caractérisé en ce qu'**il comprend en outre des manchons limiteurs de courbure montés autour dudit conduit flexible (48) au voisinage desdites extrémités opposées.

9. Dispositif de raccordement selon l'une quelconque des revendications 1 à 8, **caractérisé en ce que** ledit conduit flexible (48) présente un rayon minimal de courbure MBR et une longueur L, et **en ce que** ladite longueur L est comprise entre 2 π et 5/2 π fois ledit rayon minimal de courbure MBR.

10. Dispositif de raccordement selon l'une quelconque des revendications 1 à 9, **caractérisé en ce que** ledit au moins un fil d'armure est enroulé en hélice de manière à former des spires jointives autour de ladite gaine étanche.

11. Dispositif de raccordement selon l'une quelconque des revendications 1 à 10, **caractérisé en ce qu'**il comprend en outre une gaine externe de protection qui s'étend autour dudit au moins un fil d'armure enroulé en hélice.

12. Dispositif de raccordement selon l'une quelconque des revendications 1 à 11, **caractérisé en ce qu'**il comprend un raccord de connexion automatique (40) destiné à être monté sur ladite extrémité amont (38), et un embout de connexion automatique (52) installé à ladite première extrémité desdites extrémités opposées, ledit embout de connexion automatique (52) étant destiné à être engagé dans ledit raccord de connexion automatique (40).

13. Dispositif de raccordement selon l'une quelconque des revendications 1 à 12, **caractérisé en ce que** ladite extrémité aval (32) de ladite conduite sous-marine de fond (14) présente un embout aval (36) orienté sensiblement verticalement.

14. Méthode de raccordement d'une conduite sous-marine de fond (14) étendue selon une composante horizontale sur un fond marin (10) pour véhiculer un fluide, et une conduite sous-marine montante (18) s'étendant depuis ledit fond marin, selon une composante verticale, vers une surface marine (12), pour pouvoir entraîner ledit fluide entre ledit fond marin et ladite surface marine (12), ladite conduite sous-marine de fond (14) présentant une extrémité aval (32) et ladite conduite sous-marine montante (18) présentant une extrémité amont (38), la méthode étant du type comprenant les étapes suivantes :
1) on fournit un dispositif de raccordement présentant deux extrémités opposées, et comprenant d'une part une gaine étanche en matériau polymère et au moins un fil d'armure enroulé en hélice autour de ladite gaine étanche pour former un conduit flexible (48), et d'autre part au moins un flotteur (50) relié audit conduit flexible (48),;
2) on raccorde lesdites extrémités opposées respectivement auxdites extrémités amont et aval ;
**caractérisée en ce qu'**à l'étape 1) on fournit un dispositif de raccordement selon l'une quelconque des revendications 1 à 13 ;
et **en ce qu'**à l'étape 2) on raccorde l'une desdites extrémités opposées à ladite extrémité aval (32) de ladite conduite sous-marine de fond (14), tandis qu'on relie l'autre desdites extrémités opposées et ladite extrémité amont (38) au moyen d'une câble de tirage amont (66) pour pouvoir entraîner ladite autre desdites extrémités opposées vers ladite extrémité amont (38) et pour raccorder ladite autre desdites extrémités à ladite extrémité amont (38) de manière à pouvoir conformer ledit conduit flexible selon une courbe en cloche au regard dudit fond marin (10) entre lesdites extrémités amont (38) et aval (32).

15. Méthode de raccordement selon la revendication 14, **caractérisée en ce qu'**à l'étape 2), on tire sur le câble de tirage amont, au moyen d'un treuil installé au niveau de ladite extrémité amont (38) pour faciliter le raccordement.

16. Méthode de raccordement selon la revendication 15, **caractérisée en ce qu'**à l'étape 2), on relie ladite une desdites extrémités opposées à ladite extrémité aval (32) au moyen d'un câble de tirage aval pour pouvoir entraîner ladite une desdites extrémités opposées vers ladite extrémité aval (32).

## Patentansprüche

1. Verformbare Kopplungsvorrichtung, umfassend die Kopplungsvorrichtung und eine Unterwasser-Steigleitung, dazu bestimmt, eine Unterwasser-Bodenleitung (14), die gemäß einer horizontalen Komponente auf einem Meeresgrund (10) gespannt ist, um ein Fluid zu transportieren, und die Unterwasser-Steigleitung (18), die sich von dem Meeresgrund aus, gemäß einer vertikalen Komponente, zu einer Meeresoberfläche (12) hin erstreckt, miteinander zu verbinden, um das Fluid zwischen dem Meeresgrund und der Meeresoberfläche (12) mitnehmen zu können, wobei die Kopplungsvorrichtung zwei gegenüberliegende Enden aufweist, während die Unterwasser-Bodenleitung (14) ein abströmseitiges Ende (32) aufweist und die Unterwasser-Steigleitung (18) ein anströmseitiges Ende (38) aufweist, wobei die gegenüberliegenden Enden dazu bestimmt sind, mit dem anströmseitigen bzw. dem abströmseitigen Ende gekoppelt zu werden, wobei die Kopplungsvorrichtung umfasst:
- eine abgedichtete Hülle aus Polymermaterial und wenigstens einen Armierungsdraht, der um die abgedichtete Hülle spiralförmig gewickelt ist, um eine flexible Rohrleitung (48) zu bilden;
- wenigstens einen Schwimmer (50), der mit der flexiblen Rohrleitung (48) derart verbunden ist, dass die flexible Rohrleitung gemäß einer Glockenkurve gegenüber dem Meeresgrund (10) zwischen dem anströmseitigen Ende (38) und dem abströmseitigen Ende (32) angepasst wird;
**dadurch gekennzeichnet, dass** die Unterwasser-Steigleitung (18) Organe (41) zur Führung um das anströmseitige Ende (38) aufweist, die zu dem anströmseitigen Ende (38) hin konvergieren, während ein erstes Ende der gegenüberliegenden Enden der flexiblen Rohrleitung (48) mit einem Verbinder (52) versehen ist, der dazu bestimmt ist, gleitend gegen die Führungsorgane in Abstützung zu kommen und zu dem anströmseitigen Ende (38) hin durch die Führungsorgane (41) geführt zu werden, um das anströmseitige Ende (38) zu erreichen.

2. Kopplungsvorrichtung nach Anspruch 1, **dadurch gekennzeichnet, dass** sie eine Mehrzahl ringförmiger Schwimmer (50) umfasst, die schrittweise um die flexible Rohrleitung (48) herum installiert sind.

3. Kopplungsvorrichtung nach Anspruch 1 oder 2, **dadurch gekennzeichnet, dass** die Steigleitung (18) im Wesentlichen konische Führungsorgane (41) aufweist.

4. Kopplungsvorrichtung nach Anspruch 3, **dadurch gekennzeichnet, dass** das anströmseitige Ende (38) der Unterwasser-Steigleitung (18) einen Verbindungsanschluss umfasst, der gemäß einer Richtung, sich zwischen einer horizontalen Richtung und einer vertikalen Richtung liegt, dem Meeresgrund (10) gegenüber ausgerichtet ist.

5. Kopplungsvorrichtung nach Anspruch 4, **dadurch gekennzeichnet, dass** das anströmseitige Ende (38) der Unterwasser-Steigleitung (18) einen Verbindungsanschluss (40) umfasst, der im Wesentlichen horizontal ausgerichtet ist.

6. Kopplungsvorrichtung nach Anspruch 4, **dadurch gekennzeichnet, dass** das anströmseitige Ende (38) der Unterwasser-Steigleitung (18) einen Verbindungsanschluss umfasst, der im Wesentlichen vertikal ausgerichtet ist.

7. Kopplungsvorrichtung nach einem der Ansprüche 1 bis 6, **dadurch gekennzeichnet, dass** das erste Ende der gegenüberliegenden Enden der flexiblen Rohrleitung (48) mit einem Verbinder (52) versehen ist, der ein Winkelstück aufweist.

8. Kopplungsvorrichtung nach einem der Ansprüche 1 bis 7, **dadurch gekennzeichnet, dass** sie ferner Krümmungsbegrenzungshülsen umfasst, die um die flexible Rohrleitung (48) herum in der Nähe der gegenüberliegenden Enden montiert sind.

9. Kopplungsvorrichtung nach einem der Ansprüche 1 bis 8, **dadurch gekennzeichnet, dass** die flexible Rohrleitung (48) einen Mindestkrümmungsradius MBR und eine Länge L aufweist und dass die Länge L zwischen dem 2 π- und dem 5/2 π-Fachen des Mindestkrümmungsradius MBR beträgt.

10. Kopplungsvorrichtung nach einem der Ansprüche 1 bis 9, **dadurch gekennzeichnet, dass** der wenigstens eine Armierungsdraht derart spiralförmig gewickelt ist, dass er nebeneinander liegende Windungen um die abgedichtete Hülle herum bildet.

11. Kopplungsvorrichtung nach einem der Ansprüche 1 bis 10, **dadurch gekennzeichnet, dass** sie ferner eine äußere Schutzhülle umfasst, die sich um den wenigstens einen spiralförmig gewickelten Armierungsdraht herum erstreckt.

12. Kopplungsvorrichtung nach einem der Ansprüche 1 bis 11, **dadurch gekennzeichnet, dass** sie einen automatischen Verbindungsanschluss (40) umfasst, der dazu bestimmt ist, an dem anströmseitigen Ende (38) montiert zu werden, und einen automatischen Verbindungsstutzen (52) umfasst, der an dem ersten Ende der gegenüberliegenden Enden installiert ist, wobei der automatische Verbindungsstutzen (52) dazu bestimmt ist, in dem automatischen Verbindungsanschluss (40) in Eingriff zu kommen.

13. Kopplungsvorrichtung nach einem der Ansprüche 1 bis 12, **dadurch gekennzeichnet, dass** das abströmseitige Ende (32) der Unterwasser-Bodenleitung (14) ein abströmseitiges Endstück (36) aufweist, das im Wesentlichen vertikal ausgerichtet ist.

14. Verfahren zum Koppeln einer Unterwasser-Bodenleitung (14), die gemäß einer horizontalen Komponente auf einem Meeresgrund (10) gespannt ist, um ein Fluid zu transportieren, und einer Unterwasser-Steigleitung (18), die sich von dem Meeresgrund aus, gemäß einer vertikalen Komponente, zu einer Meeresoberfläche (12) hin erstreckt, um das Fluid zwischen dem Meeresgrund und der Meeresoberfläche (12) mitnehmen zu können, wobei die Unterwasser-Bodenleitung (14) ein abströmseitiges Ende (32) aufweist und die Unterwasser-Steigleitung (18) ein anströmseitiges Ende (38) aufweist, wobei das Verfahren vom Typ ist, umfassend die folgenden Schritte:
1) Bereitstellen einer Kopplungsvorrichtung, aufweisend zwei gegenüberliegende Enden und umfassend einerseits eine abgedichtete Hülle aus Polymermaterial und wenigstens einen Armierungsdraht, der um die abgedichtete Hülle spiralförmig gewickelt ist, um eine flexible Rohrleitung (48) zu bilden, und andererseits einen Schwimmer (50), der mit der flexiblen Rohrleitung (48) verbunden ist;
2) Koppeln der gegenüberliegenden Enden mit dem anströmseitigen bzw. dem abströmseitigen Ende;
**gekennzeichnet dadurch, dass** in Schritt 1) eine Kopplungsvorrichtung nach einem der Ansprüche 1 bis 13 bereitgestellt wird;
und dass in Schritt 2) das eine der gegenüberliegenden Enden mit dem abströmseitigen Ende (32) der Unterwasser-Bodenleitung (14) gekoppelt wird, während das andere der gegenüberliegenden Enden und das anströmseitige Ende (38) mittels eines anströmseitigen Zugseils (66) verbunden werden, um das andere der gegenüberliegenden Enden zu dem anströmseitigen Ende (38) hin mitnehmen zu können, und um das andere der Enden mit dem anströmseitigen Ende (38) derart zu koppeln, dass die flexible Rohrleitung gemäß einer Glockenkurve gegenüber dem Meeresgrund (10) zwischen dem anströmseitigen Ende (38) und dem abströmseitigen Ende (32) angepasst wird.

15. Kopplungsverfahren nach Anspruch 14, **dadurch gekennzeichnet, dass** in Schritt 2) an dem anströmseitigen Zugseil mittels einer Winde gezogen wird, die im Bereich des anströmseitigen Endes (38) installiert ist, um das Koppeln zu erleichtern.

16. Kopplungsverfahren nach Anspruch 15, **dadurch gekennzeichnet, dass** in Schritt 2) das eine der gegenüberliegenden Enden mit dem abströmseitigen Ende (32) mittels eines abströmseitigen Zugseils verbunden wird, um das eine der gegenüberliegenden Enden zu dem abströmseitigen Ende (32) hin mitnehmen zu können.

## Claims

1. A deformable coupling device, comprising the coupling device and an underwater riser, intended to connect together an underwater flow line (14) running along a horizontal component on a seabed (10) to carry a fluid and the underwater riser (18) running from said seabed along a vertical component towards a sea surface (12) to be able to carry said fluid between said seabed and said sea surface (12), said coupling device having two opposite extremities, while said underwater flow line (14) has a downstream extremity (32) and said underwater riser (18) has an upstream extremity (38), said opposite extremities being intended to be connected to said upstream and downstream extremities, respectively; said coupling device comprising :
a leaktight sheath of polymer material and at least one reinforcing wire wound in a helix around said leaktight sheath to form a flexible pipe (48) ;
at least one float (50) connected to said flexible pipe (48) so as to shape said flexible pipe into a bell-shaped curve with respect to said seabed (10) between said upstream (38) and downstream (32) extremities ;
**characterized in that** said underwater riser (18) has guide members (41) around said upstream extremity (38) and converging towards the upstream extremity (38), while a first extremity of said opposite extremities of said flexible pipe (48) is provided with a connector (52) intended to slidably bears against said guide members and to be guided towards said upstream extremity (38) by said guide means (41) in order to reach said upstream extremity (38).

2. The coupling device according to claim 1, **characterized in that** it comprises a plurality of annular floats (50) fitted close to each other around said flexible pipe (48).

3. The coupling device according to claim 1 or 2, **characterized in that** said underwater riser (18) is provided with substantially conical guide members (41).

4. The coupling device according to claim 3, **characterized in that** said upstream extremity (38) of said underwater riser (18) comprises a connection member orientated in a direction between a horizontal direction and a vertical direction away from said seabed (10).

5. The coupling device according to claim 4, **characterized in that** said upstream extremity (38) of said underwater riser (18) comprises a connection member (40) orientated substantially horizontally.

6. The coupling device according to claim 4, **characterized in that** said upstream extremity (38) of said underwater riser (18) comprises a connection member orientated substantially vertically.

7. The coupling device according to any one of claims 1 to 6, **characterized in that** said first extremity of said opposite extremities of said flexible pipe (48) includes a connector (52) having an elbow.

8. The coupling device according to any one of claims 1 to 7, **characterized in that** it further comprises curvature-limiting sleeves mounted around said flexible pipe (48) in the vicinity of said opposite extremities.

9. The coupling device according to any one of claims 1 to 8, **characterized in that** said flexible pipe (48) has a minimum curvature radius MBR and a length L, and **in that** said length L is between 2.π and 5/2.π times said minimum curvature radius MBR.

10. The coupling device according to any one of claims 1 to 9, **characterized in that** said at least one reinforcing wire is wound in a helix so as to form touching turns about said leaktight sheath.

11. The coupling device according to any one of claims 1 to 10, **characterized in that** it further comprises an outer protection sheath extending around said at least one reinforcing wire wound into a helix.

12. The coupling device according to any one of claims 1 to 11, **characterized in that** it comprises an automatic connection member (40) intended to be mounted on said upstream extremity (38) and an automatic connection end fitting (52) installed at said first extremity of said opposite extremities, said automatic connection end fitting (52) being intended to be engaged in said automatic connection member (40).

13. The coupling device according to any one of claims 1 to 12, **characterized in that** said downstream extremity (32) of said underwater flow line (14) has a downstream end (36) orientated substantially vertically.

14. A method for connecting an underwater flow line (14) running according to a horizontal component on a seabed (10) to carry a fluid and an underwater riser (18) running from said seabed along a vertical component to a sea surface (12) to be able to carry said fluid between said seabed and said sea surface (12), said underwater flow line (14) having a downstream extremity (32) and said underwater riser (18) having an upstream extremity (38), the method being of the type comprising the following steps:
1) a coupling device having two opposing extremities and comprising on the one hand, a leaktight sheath made of polymer material and at least one reinforcing wire wound in a helix around said leaktight sheath to form a flexible pipe (48) and, on the other hand, at least one float (50) connected to said flexible pipe (48), is provided ;
2) said opposing extremities are connected to said upstream and downstream extremities respectively ;
**characterized in that** in step 1) a coupling device according to any one of claims 1 to 13 is provided,
and **in that** in step 2) one of said opposite extremities is connected to said downstream extremity (32) of said underwater flow line (14), while the other of said opposite extremities and said upstream extremity (38) are connected by means of an upstream pulling cable (66) to be able to pull said other of said opposite extremities towards said upstream extremity (38) and to connect said other of said opposite extremities to said upstream extremity (38) so as to shape said flexible pipe into a bell-shaped curve in relation to said seabed (10) between said upstream (38) and downstream (32) extremities.

15. The method of connection according to claim 14, **characterized in that** in step 2) the upstream pulling cable is pulled by means of a winch installed at said upstream extremity (38) in order to facilitate the connection.

16. The method of connection according to claim 15, **characterized in that** in step 2) said one of said opposite extremities is connected to said downstream extremity (32) by means of a downstream pulling cable in order to be able to pull said one of said opposite extremities towards said downstream extremity (32).
